# EUROPEAN PATENT SPECIFICATION

(11) **EP 3 019 733 B1**
(45) Date of publication and mention of the grant of the patent: **23.08.2017**
(21) Application number: 14758643.2
(22) Date of filing: 08.07.2014
(51) Int. Cl.: F02M 21/02

(54) **AN INTEGRATED DEVICE FOR FUEL SUPPLY IN AN INTERNAL COMBUSTION ENGINE**
INTEGRIERTE VORRICHTUNG FÜR DIE KRAFTSTOFFZUFUHR IN EINER BRENNKRAFTMASCHINE
DISPOSITIF INTÉGRÉ POUR L'ALIMENTATION EN CARBURANT DANS UN MOTEUR À COMBUSTION INTERNE

(30) Priority: 12.07.2013 IT RE20130050
(43) Date of publication of application: 18.05.2016
(73) Proprietor: Rail S.R.L., 42030 Vezzano Sul Crostolo (RE) (IT)
(72) Inventor: STEVANI, Luigi, I-42030 Vezzano Sul Crostolo (Reggio Emilia) (IT)
(74) Representative: Corradini, Corrado
(86) International application number: PCT/IB2014/001301
(87) International publication number: WO 2015/004518

(56) References cited:
- EP-A1- 1 936 174
- EP-A1- 2 532 878
- US-A1- 2003 192 513

## Description

The present invention relates to an integrated device for supplying fuel to an internal combustion engine, in particular for supplying fuel in a gaseous state, such as for example Liquefied Petroleum Gas (LPG), methane gas or other gases.

As is known, an internal combustion engine conventionally comprises an engine block in which a plurality of cylinders is fashioned, each of which houses an alternating piston and is closed by a head defining a combustion chamber with the piston.

The pistons are mechanically connected to a crank shaft, so that the alternating motion of each piston, caused by the combustion of an air-fuel mixture internally of the combustion chamber, is transformed into a rotation of the crank shaft.

In order to function, an internal combustion engine is therefore generally provided with an aspirating system of the comburent air, a fuel injection system, typically a fuel in the liquid state, and an exhaust system of the gases produced by the combustion of the air-fuel mixture internally of the cylinders.

The aspiration system comprises an aspirating conduit able to convey an air flow internally of an aspirating manifold from which a plurality of tubes radiate, each of which is connected to a respective cylinder of the engine via at least an aspirating valve.

Likewise, the exhaust system comprises a discharge manifold from which a plurality of tubes leave, each of which is connected to a respective cylinder of the engine via at least an exhaust valve, and an exhaust conduit able to convey the flow of the combustion gases from the exhaust manifold to the outside environment.

The injection system of the liquid fuel generally comprises at least an injector for each cylinder of the engine, which can receive the fuel from a pump connected to a tank, and is able to inject the fuel directly internally of a respective cylinder (for example in spontaneous compression-combustion engines, typically fuelled by diesel oil) or internally of aspirating systems (for example in spark-ignited engines, typically fuelled by petrol).

Especially in the field of motor vehicles, there are many internal combustion engines supplied entirely or partly with a fuel in the gaseous state, for example with methane gas or Liquefied Petroleum Gas (LPG).

In these engines, the above-mentioned injection system is flanked to or replaced by a combustible gas supply plant, which is situated internally of an appropriate pressurised tank installed on the vehicle.

The pressurised tank is connected to a pressure reducer, which has the task of reducing and regulating the pressure of the fuel in arrival from the tank and a preset value, in the case of LPG also causing passage from the liquid to the gaseous state.

The pressure reducer comprises a reducer body, i.e. a closed shell provided with an inlet and an outlet, internally of which special valve means are housed, which have the aim of reducing the pressure of the fuel in inlet and to regulate it so as to obtain a predetermined and practically constant value of the gas pressure at the outlet.

The gaseous fuel exiting from the pressure reducer is made to pass through a low-pressure filter, which has the task of retaining the impurities that are present therein.

The low-pressure filter in turn comprises a filter body, i.e. a closed shell provided with an inlet and an outlet, which contains a porous filter element arranged in such a way as to be crossed by the gas flowing from the inlet towards the outlet.

The filtered gaseous fuel is lastly conveyed to an injector group, each of which is able to inject the gas internally of the aspirating tube of a respective cylinder.

Each injector normally comprises an injector body that is closed and internally hollow, provided with an inlet and an outlet, which contains valve means, typically a solenoid, for selectively opening and closing the communication between the inlet and the outlet.

The injectors can be realised as single components or can be grouped in a single device or block which is conventionally called a rail.

The pressure reducer, the low-pressure filter and the injector group are however always realised as separate components, which are located in different positions internally of the engine compartment and are connected to one another by means of tubes or rubber connector fittings responding to the existing standards and fixed using metal bands.

A supply plant of combustible gas thus realised is certainly efficient, but the separation and dispersion of the components thereof makes the plant installation step rather complicated and laborious and further leads to some important functional drawbacks.

For example, the low-pressure value set by the pressure reducer is a parameter that is normally calibrated by the manufacturer so as to be able to guarantee optimal functioning of the injectors.

However, the filter and the tracts of tube (with relative connectors) which connect the filter to the pressure reducer and the injector group lead to concentrated and distributed load loss which reduce the pressure value in a way that cannot be forecast.

To prevent the load loss from causing a reduction in the plant performance, it is therefore generally necessary to measure the exact pressure of the combustible gas in proximity of the injector group and consequently to regulate the calibration of the reducer.

This solution however requires installation of pressure sensors which complicate the whole plant and make it more expensive.

A further drawback relates to the fact that some gaseous fuels such as LPG have to be heated.

This heating is generally obtained by heating the pressure reducer, typically by connecting it to the circuit of the cooling water of the engine.

Owing to the distance between the pressure reducer and the injectors, a part of the heat yielded to the fuel gas in the reducer is however dispersed in the filter and the connecting tubes (and relative fittings), causing a loss of efficiency and/or precision of the plant.

In this case too, to counter this loss of efficiency, it is necessary to predispose expensive temperature sensors at the injector group, by means of which to appropriately regulate the heating of the pressure reducer.

A further drawback consists in the fact that with low external temperatures the filter in the separated position can constitute a dangerous recondensation point of the gaseous fuel, and can be a further possible cause of malfunctioning.

Document US2003/192513 discloses an integrated device for fuel supply which comprises a pressure reducer comprising a reducer body containing valve means for reducing and regulating a pressure of the fuel, a filter having a filter body containing a filter element for filtering the fuel, and one or more injectors having an injector body containing valve means for regulating the fuel flow towards a nozzle, wherein a portion of the reducer body and a portion of the filter body are realized by one monolithic hollow body.

One of the aims of the present invention is to supply a solution that enables simplification of the combustible gas supply plant installation.

Other aims are to at least partly obviate the above-mentioned functional drawbacks of the prior art, while being a simple, rational and relatively inexpensive solution.

These and other aims are attained by the characteristics of the invention as related in independent claim 1. The dependent claims delineate preferred and/or particularly advantageous aspects of the invention.

In particular, an embodiment of the present invention discloses an integrated device for supplying fuel to an internal combustion engine, which comprises at least:
a pressure reducer comprising a reducer body containing valve means for reducing and regulating a pressure of the fuel,
a filter comprising a filter body containing a filter element for filtering the fuel, and
one or more injectors, each of which in turn comprises an injector body in which valve means are contained for regulating the fluid flow towards a nozzle,
wherein at least a portion of the reducer body and at least a portion of the filter body and at least a portion of the injector body are made by an internally hollow single body.

With this solution, the function of reduction/regulation of the pressure and the function of filtering the gaseous fuel are advantageously integrated in a single component, which can therefore be installed in a more rapid and economical way.

A further advantage of this solution consists in the fact that should the pressure reducer be heated to increase the temperature of the combustible gas, the single body transmits the heat to the filter too, reducing the risk that the combustible gas can re-condense therein.

The device of the present invention further integrates the injection function of the fuel, thereby obtaining a greater integration of the functional components, as well as an economic saving in a case in which there is no recourse to standardised injectors.

In other words, a single component is obtained with integrates therein the three main functions of the combustible gas supply plant, the mounting of which is therefore very much simpler and more rational with respect to the prior art.

A further advantage of this solution consists in the fact that given the vicinity of all the functions the temperature of the combustible gas at the injectors is almost the same as the temperature at the pressure reducer, improving plant performance.

This uniformity of temperature can further enable a reduction of the number of sensors dedicated to the monitoring of the temperature, with consequent benefits in economic terms.

In an aspect of the invention, the single body can comprise an internal channelling which places a containing chamber of the valve means of the pressure reducer in communication with a containing chamber of the filter element.

In this way, the installation of the integrated device requires a smaller number of tubes and connecting fittings, thus advantageously reducing load losses and further simplifying mounting of the plant.

In an aspect of the present invention the single body of the integrated device can comprise an internal channelling able to place the containing chamber of the filter element in communication with the internal volume of the injector body of each injector. With this solution all the tubes and connection fittings which are normally present between the filter and the injectors can be advantageously eliminated, further simplifying the mounting of the plant and further reducing the load loss.

In particular, the pressure drop between the pressure reduction and the injection of the gas can be reduced to the point of enabling elimination of the pressure sensors or in any case a reduction in the number thereof, with a consequent reduction in costs.

In an embodiment, the above-mentioned internal channelling can comprise a manifold compartment communication with the containing chamber of the filter element and with the internal volume of the injector body of each injector.

This solution is particularly advantageous in a case in which the integrated device is designed for a multi-cylinder engine and thus comprises more than one injector.

In a further aspect of the present invention, the single body of the integrated device can comprise a further internal channelling for circulation of a second fluid, which is separated from the chambers and the channellings for the fuel passage.

This further channelling has the advantage of being able to be connected to the engine cooling water circulating plant, so that the hot water exiting from the engine can be effectively used for heating the pressure reducer. Naturally the field of the invention also extends to a fuel supply plant for an internal combustion engine which comprises a tank for containing the fuel to which the above-mentioned device is collected, as well as an internal combustion engine equipped with the combustible fuel supply system. Further characteristics and advantages of the invention will become evident from a reading of the following description supplied by way of non-limiting example, with the aid of the figures illustrated in the accompanying tables of drawings.
Figure 1 is a plant view of an integrated device for supplying LPG to an internal combustion engine, which falls outside the scope of the present invention.
Figure 2 is section II-II of the device illustrated in figure 1, shown in a slightly larger scale.
Figure 3 is an axonometric view of an integrated device for supply of methane to an internal combustion engine, according to an embodiment of the present invention.
Figure 4 is a lateral view of the device of figure 3.
Figure 5 is a plan view of the device of figure 3.
Figure 6 is section VI-VI of figure 4 shown in a larger scale.
Figure 7 is section VII-VII of figure 5, shown in a larger scale.

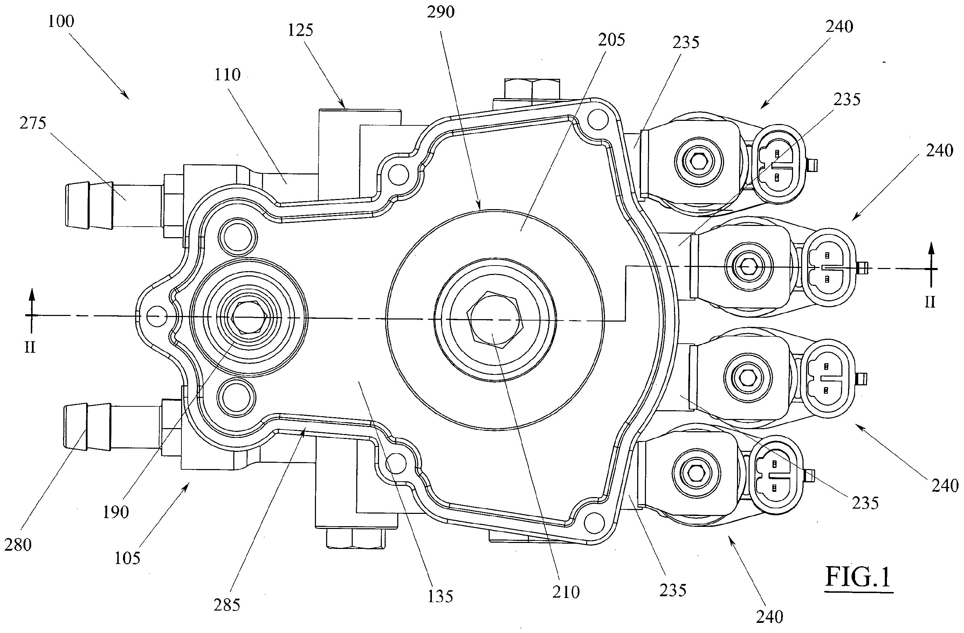

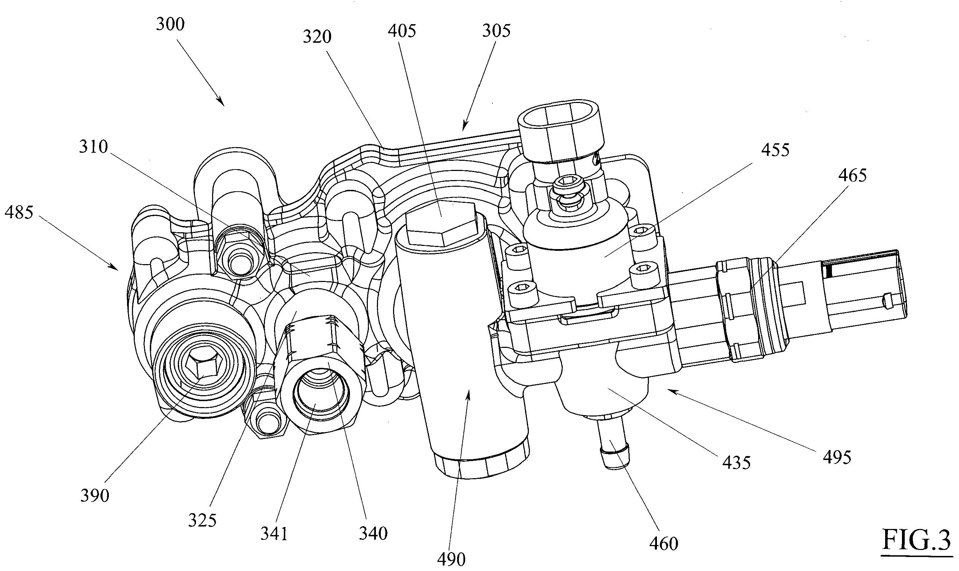

Each of the devices illustrated in figures 1 and 3 is destined to be applied to an internal combustion engine, for example an internal combustion engine of a motor vehicle or motor boat, or a fixed installation for production of electrical or heat energy.

More specifically, each device is destined to be applied to an internal combustion engine equipped with a supply plant of gaseous fuel, such as for example liquefied petroleum gas (LPG), methane gas or other gases.

The internal combustion engine (not illustrated) can comprise an engine block in which a plurality of cylinders is fashioned, each of which houses an alternating piston and is closed by a head defining a combustion chamber with the piston.

The pistons are mechanically connected to a crankshaft, so that the reciprocating movement of each piston, caused by the combustion of a fuel-air mixture inside the respective combustion chamber, is transformed into a rotation of the crankshaft. The air is supplied to the engine through an aspirating intake system, which may include an aspirating conduit able to convey an air flow internally of an intake manifold from which radiate a plurality of tubes, each of which is connected to a respective cylinder of the engine via at least an aspirating valve.

The fuel supply system first comprises a storage tank, in which the fuel is stored at a higher pressure than atmospheric pressure.

In some applications, typically in the case of LPG, the fuel inside the storage tank is in the liquid state, while in other applications, as in the case of methane, the fuel in the storage tank is already in the gaseous state.

The fuel supply system therefore comprises a hydraulic apparatus able to source the fuel from the storage tank and to inject it in the gaseous state in the intake pipe of each cylinder, so as to mix the fuel with the air that is aspirated into the combustion chamber.

Each of the devices shown in the appended figures is destined to be installed in this apparatus.

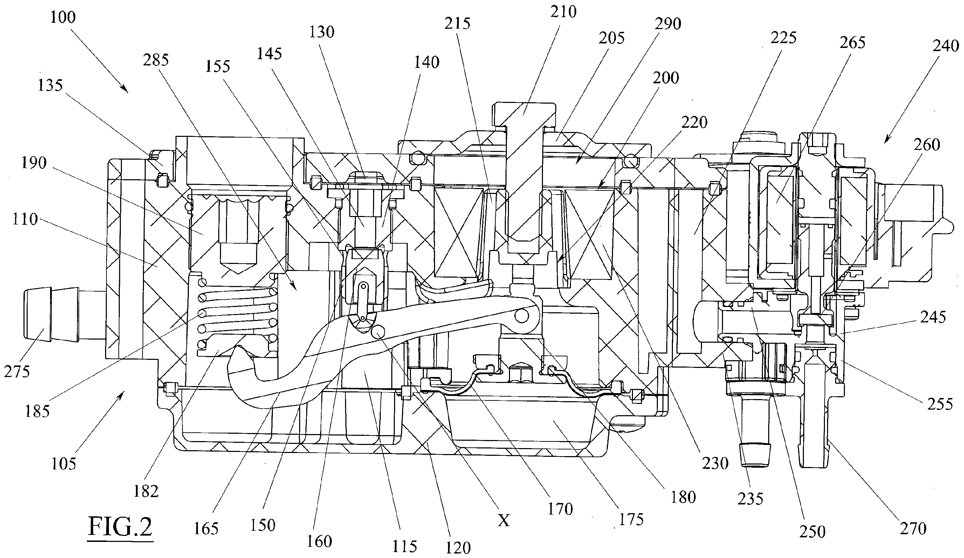

In particular, the device 100 illustrated in figures 1 and 2, which fall outside the scope of the present invention, is intended for use in LPG applications.

In more detail, the device 100 comprises a single shell or closed outer casing 105, which is essentially defined by a single body 110 that can be made of a metal material, such as cast aluminium.

The single body 110 is internally hollow, i.e. includes a plurality of internal cavities.

These cavities in particular include a first chamber 115 of relatively large size.

The room 115 is closed by a bottom cover 120 which is fixed to single body 110 with the interposing of appropriate seals that guarantee the hermetic seal.

The bottom cover 120 may be also made of a metal material, such as cast aluminium.

The first chamber 115 is in communication with an inlet conduit 125 for the fuel (see figure 1), which is suitable for connection with the LPG storage tank. In the illustrated example, the inlet conduit 125 is directly formed in the single body 110.

In particular, the inlet conduit 125 is located in a lateral position and communicates with a channelling (not visible) which is also formed in the single body 110.

The channeling connects the inlet conduit 125 with a narrow gap 130 (see figure 2), which is formed at the interface between the single body 110 and an upper cover 135.

The upper cover 135 is fixed to the single body 110 with the interposing of appropriate seals that ensure hermetic closure of the gap 130.

The upper cover 135 can also be made of a metal material, for example cast aluminium.

The single body 110 has a hole at the gap 130 in which a threaded insert 140 is screwed, which in turn comprises a central through-hole 145 connecting the cavity 130 with the chamber 115.

The threaded insert 140 further comprises a cylindrical sleeve 150, which surrounds the outlet hole of the central hole 145 and is provided with a plurality of lateral openings 155.

Valve means are housed inside the chamber 115 so as to reduce and adjust the fuel pressure.

In the illustrated example the valve means comprise a piston 160, which is slidably inserted internally of the cylindrical sleeve 150 of the threaded insert 140, so as to selectively open and close the central hole 145.

The valve means further comprise a rocker arm 165, which is centrally pivoted to the single body 110 and oscillates by rotating around a fixed axis X.

The piston 160 and the rocker arm 165 are reciprocally connected so that a rotation of the rocker arm 165 around the fixed axis X is transformed into a sliding of the piston 160 in the cylindrical sleeve 150.

The valve means further comprise an elastically flexible membrane 170, the peripheral edge of which is blocked between the single body 110 and the lower cover 120.

The membrane 170 hermetically separates the chamber 115 from a compartment 175 defined by a niche formed in the lower cover 120 and which contains only air.

A support element 180 is fixed at the centre of the membrane 170, which support element 180 is hinged to a first end of the rocker arm 165.

The opposite end of the rocker 165 is placed in contact with an abutting plate 182.

A spring 185 presses on the abutting plate 182 which pushes the rocker arm 165 to rotate in the de-inserting direction of the plunger 160 from the cylinder sleeve 150, opening the central hole 145 of the threaded insert 140.

In particular, the spring 185 is compressed between the abutting plate 182 and a regulating screw 190, which is screwed internally of a cylindrical shank realized in the single body 110.

The cylindrical shank exhibits a tract that inserts and projects through an opening of the upper cover 135, so that the regulating screw 190 is accessible from the outside.

The cavity of the single body 110 further comprise a relatively large second chamber 200.

In the illustrated example, the chamber 200 is superimposed on the membrane 170 and substantially exhibits a beaker shape, the mouth of which is directed towards the upper cover 135.

The upper cover 135 exhibits an access opening at the chamber 200, which is closed by a cap 205 with an interposing of a suitable sealing gasket.

The cap 205 is fixed by means of a central screw 210 to a truncoconical shank 215 which is formed in a single piece with the body 110 and projects centrally from the bottom of the chamber 200.

Radial openings 220 are made at the base of the truncoconical shank 215 of which define an internal channelling able to place the chamber 115 in communication with the chamber 200.

A manifold compartment 225 and a further internal channel (not visible) are also formed in the single body 110, connecting the manifold compartment 225 with the chamber 200.

The chamber 200 contains a filter element 230 made of a porous material, which is positioned so as to intercept the entire flow of fuel flowing from the chamber 115 to the manifold compartment 225.

Lastly, a series of outlets 235 is also built in the single body 110, which are mutually independent and are all in communication with the manifold compartment 225 (see also figure 1).

A respective injector 240 is directly coupled to each of these outlets 235.

Each injector 240 includes an injector body 245, i.e. an internally hollow outer shell, which is provided with an inlet opening 250, an outlet opening 255 and an internal channelling which places the inlet mouth 250 in communication with the outlet mouth 255.

The inlet 250 of the injector body 245 is shaped as a sleeve, which is directly sealedly inserted inside the respective outlet mouth 235 of the single body 110.

A mobile obturator 260 is housed inside the injector body 245, which obturator 260 is able to cooperate with a corresponding valve seating for selectively opening and closing the above-mentioned channelling.

The mobile obturator 260 is controlled by an electric actuator 265, which is fixed above the injector body 245.

The injector 240 lastly comprises a dispersing nozzle 270 screwed to the output mouth 255, which is able to be connected to the aspirating pipe of a respective cylinder of the engine.

A auxiliary internal channelling (not visible) is also formed in the single body 110, which channelling comprises an inlet 275 and an outlet 280 (see figure 1), and which channelling is distinct and hermetically separated from the chambers and channellings for the fuel passage.

The inlet 275 and outlet 280 are destined to be connected to the cooling circuit of the engine, so that the hot water in outlet therefrom can be circulated inside the auxiliary channelling, heating the single body 110 and all the components associated thereto.

The functioning of the device 100 is as follows.

The LPG in the liquid state coming from the storage tank reaches the inlet conduit 125, passes into the cavity 130 and enters the chamber 115 through the central hole 145 and the lateral openings 155 formed in the threaded insert 140. In this path, the LPG undergoes a reduction in pressure which also causes the transition from the liquid state to the gaseous state.

The gas pressure inside the chamber 115 acts on the membrane 170 to flex it towards the inside of the compartment 175, so that the membrane 170 normally tends to rotate the rocker arm 165 in the opposite direction to the direction imposed by the spring 185.

If the gas pressure within the chamber 115 is below a predetermined equilibrium value, which depends on the preload of the spring 185, the piston 160 thus tends to de-insert with respect to the cylindrical sleeve 150 of the threaded insert 140, increasing the passage aperture between the central hole 145 and the lateral openings 155 and thus reducing the load losses. Vice versa if the gas pressure increases above said equilibrium value, the thrust exerted on the membrane 170 overcomes the thrust of the spring 185, so that the piston 160 tends to insert more in the cylindrical sleeve 150 of the threaded insert 140, reducing the passage aperture between the central hole 145 and the lateral openings 155 and thus increasing the load losses.

In this way, the gas pressure inside the chamber 115 is continuously adjusted so that it is maintained constantly on average around the pressure of equilibrium.

This equilibrium pressure can of course be adjusted by varying the preload of the spring 185 with the adjustment screw 190.

The fuel gas is then forced to flow from room 115 into the manifold chamber 225 through the chamber 200 containing the filter element 230.

In this way, the whole gas flow is intercepted by the filter element 230, which retains the impurities possibly present therein.

When the filter element 230 is completely clogged, it can be replaced simply by removing the cap 205 and extracting the filter element through the opening of the upper cover 135.

On reaching the compartment manifold 225, the filtered fuel gas is finally conveyed internally of the injectors 240, which are opened in a controlled order so as to enable release of metered quantities of fuel gas into the engine cylinders.

With this solution, the device 100 incorporates a pressure reducer, denoted in its entirety by 285, and a filter, denoted in its entirety by 290, in which the body of the reducer and the body of the filter are both at least in part realized in the single body 110, to which the injectors 240 are also fixed.

Although the device 100 described above includes a plurality of injectors 240, the injectors might also be slightly modified and equipped with a single injector 240, for example to be used with a single cylinder engine.

Further, although the device 100 is especially intended to be used in an LPG power plant, it might also be used in a methane gas or other gas plant.

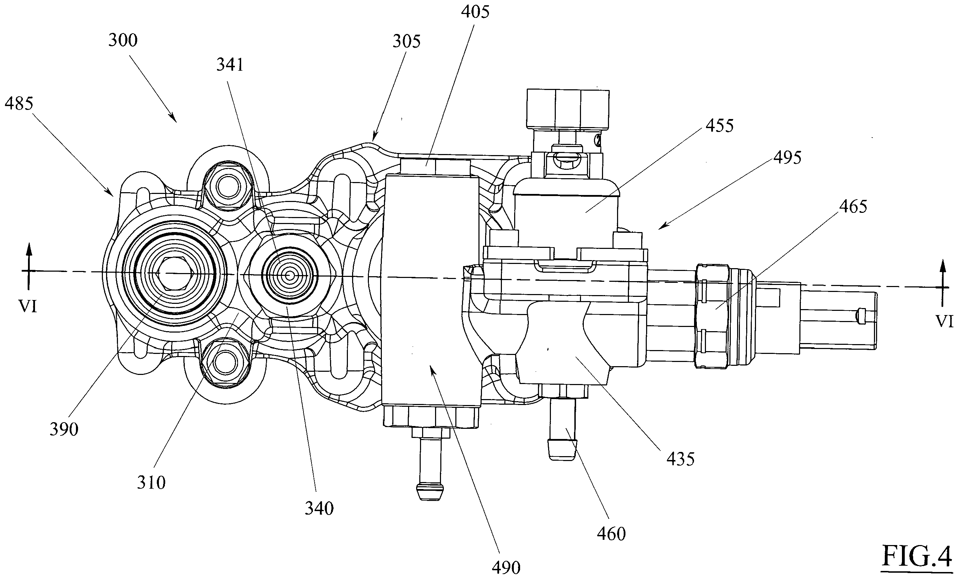

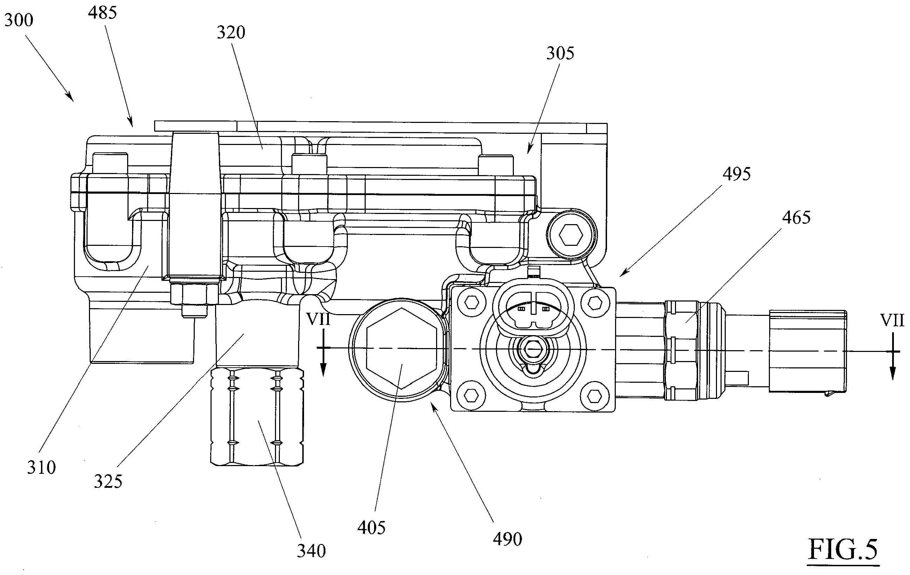

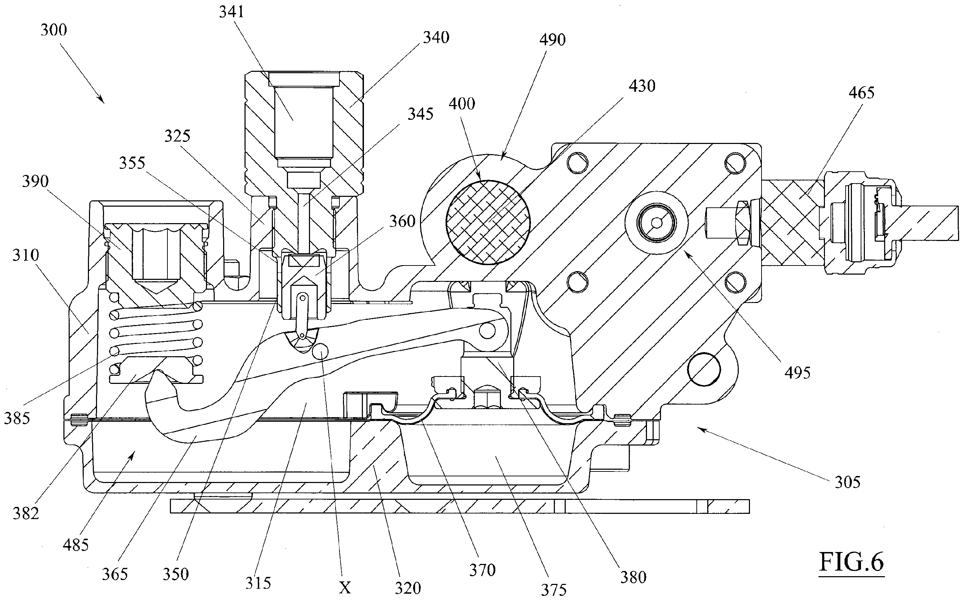

Figures 3 to 7 illustrate an embodiment of the invention, which relates to a device 300 especially intended to be used in methane plants.

In greater detail, the device 300 comprises a single shell or closed outer casing 305, which is substantially defined by a single main body 310 that can be made of a metal material, such as cast aluminium.

The single body 310 is internally hollow and includes a plurality of internal cavities.

The cavities in particular include a first chamber 315 of relatively large size. The chamber 315 is closed by a lateral cover 320 that is fixed to the single body 310 with the interposing of appropriate seals that guarantee the hermetic seal.

The lateral cover 320 can be also made of a metal material, such as cast aluminium.

The first chamber 315 is in communication with an inlet conduit 325 for the fuel, which is adapted to be connected with the storage tank of methane gas. In the illustrated example, the inlet conduit 325 is directly formed in the single body 110.

In particular, the inlet conduit 325 is located on the side opposite the lateral cover 320 and flows directly into the chamber 315.

A threaded fitting 340 is screwed inside the inlet conduit 325, which has a cavity 341 able to receive a connecting tube to the methane tank, and a central through-hole 345 that connects the cavity 341 to the chamber 315. The internal end of the threaded connection 340 further includes a cylindrical sleeve 350, which surrounds the aperture of the central hole 345 and is provided with a plurality of lateral openings 355.

Valve means are housed inside the chamber 315 so as to reduce and adjust the pressure of the fuel coming from the inlet conduit 325.

In this example too, the above-mentioned valve means may comprise a plunger 360, which is slidably inserted in the cylindrical sleeve 350 of the threaded connection 340, so as to selectively open and close the central hole 345.

The valve means can also include a rocker arm 365, which is centrally pivoted to the single body 310 so as to oscillate by rotating around a fixed axis X.

The piston 360 and the rocker arm 365 are reciprocally connected in such a way that a rotation of the rocker arm 365 around the fixed axis X is transformed into a sliding of the piston 360 in the cylinder liner 350.

The valve means can also include an elastically flexible membrane 370, a peripheral edge of which is clamped between the single body 310 and the lateral cover 320.

The membrane 370 hermetically separates the chamber 315 from a compartment 375 which is defined by a niche formed in the lateral cover 320 and containing only air.

A support element 380 is fixed to the centre of the membrane 370, which support element 380 is hinged to a first end of the rocker arm 365.

The opposite end of the rocker arm 365 is placed in contact with an abutting plate 382.

A spring 385 operates on the abutting plate 382 and pushes the rocker arm 365 to rotate in the direction of deinserting the plunger 360 from the cylindrical liner 350, opening the central hole 345 of the threaded connector 340.

In particular, the spring 385 is compressed between the abutting plate 382 and an adjusting screw 390, which is screwed inside a cylindrical shank realized in the single body 310.

The cavity of the single body 310 further includes a relatively large second chamber 400.

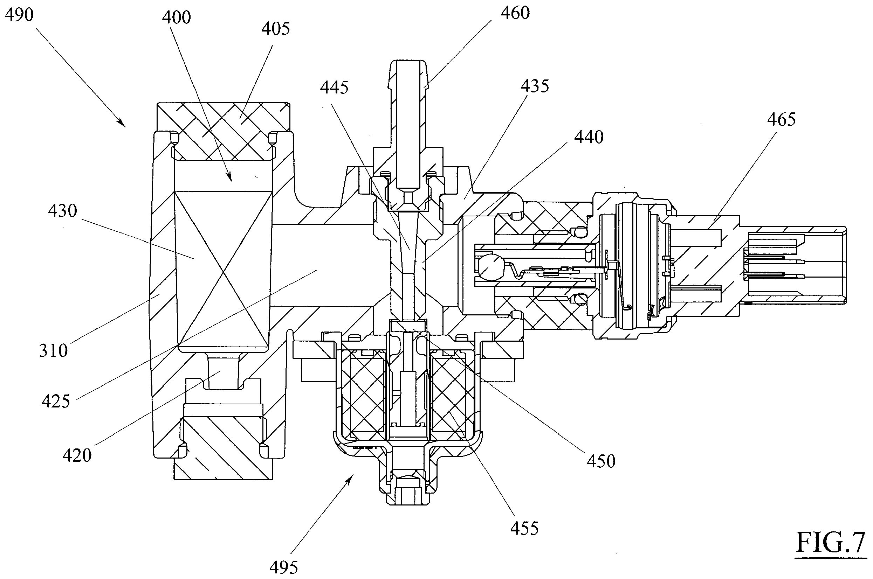

In the illustrated example, the chamber 400 is superimposed on the membrane 370 and substantially exhibits a beaker-shape, a mouth of which is closed by a threaded cap 405 (see figure 7).

The bottom of the chamber 400 exhibits an opening 420 which, via an internal channelling in the single body 310 (not visible), places the chamber 400 in communication with the chamber 315.

A manifold compartment 425 is further formed in the single body 310 and is in communication with the chamber 400.

The chamber 400 contains a filter element 430 made of a porous material, which is positioned so as to intercept the entire fuel flow passing from the chamber 315 to the manifold compartment 425.

Lastly, an outlet mouth 435 is realised in the single body 310 and is in communication with the manifold compartment 425.

A hollow insert 440 is directly screwed to this outlet mouth 435, which has a central through hole 445 that connects the manifold compartment 425 with the outside.

A mobile obturator 450 is also housed inside the compartment manifold 425, which is able to cooperate with the inner end of the insert cable 440 to selectively open and close the central hole 445.

The mobile obturator 450 is controlled by an electric actuator 455, which is fixed directly to the single body 310. Lastly a delivery nozzle 460 is directly screwed to the external end of the insert 440, which can be connected to the aspirating pipe of an engine cylinder.

A sensor 465 is also screwed to the single body 310, a sensitive element of which sensor 465 is positioned directly inside the manifold compartment 425 so as to measure pressure and temperature of the gas.

The device 300 functions as follows.

The pressurised methane gas contained in the storage tank reaches the inlet conduit 325 and enters the chamber 315 through the central hole 345 and the lateral openings 355 formed in the threaded connection 340, undergoing a pressure reduction.

The gas pressure inside the chamber 315 acts on the diaphragm 370 so as to flex it towards the inside of the compartment 375, so that the membrane 370 normally tends to rotate the rocker arm 365 in the opposite direction to the direction imposed by the spring 385.

If the gas pressure internally of the chamber 315 is below a predetermined equilibrium value, which depends on the preload of the spring 385, the piston 360 tends to de-insert with respect to the cylindrical sleeve 350 of the threaded connection 340, increasing the passage aperture between the central hole 345 and the lateral openings 355 and thus reducing load losses. If however the gas pressure increases above said equilibrium value, the thrust exerted on the membrane 370 overcomes the thrust of the spring 385, so that the piston 360 tends to insert more in the cylindrical sleeve 350 of the threaded connection 340, reducing the passage aperture between the central hole 345 and the lateral openings 355, thus increasing the load losses.

In this way, the gas pressure inside the chamber 315 is continuously adjusted so that it is always maintained at around an average of the equilibrium pressure.

This equilibrium pressure can of course be adjusted by varying the preload of the spring 385 with the adjustment screw 390.

The combustible gas is then forced to flow from the chamber 315 into the manifold compartment 425 through the chamber 400 that contains the filter element 430. In this way, all the gas flow is intercepted by the filter element 430, which retains any impurities present in it.

When the filter element 430 is completely clogged, it can be replaced simply by removing the cap 405 and extracting the filter element 430.

Once it has reached the compartment manifold 425, the combustible gas is injected into the engine cylinder in metered quantities, by means of controlled activation of the obturator 450 which periodically opens the central hole 445 of the hollow insert 440.

With this solution, the device 300 incorporates a pressure reducer, denoted in its entirety by reference numeral 485, a filter, denoted by reference numeral 490, and also an injector, denoted in its entirety by 495, in which the body of the reducer, the filter body and the injector body are all at least partly realized in the single body 310.

In practice, the single body 310 also defines the internally-hollow external shell of the injector, i.e. the portion defining an internal chamber able to receive and contain the fuel to be injected, as well as the valve means, for example the valve body and the valve seating, which enable selectively placing the internal chamber in communication with the outlet of the injector. Although the device 300 described herein above comprises a single injector 495, for example to be used with a single cylinder engine, it is possible for it to be slightly modified and equipped with a plurality of injectors 495.

For example, the single body 310 can include a plurality of outlet mouths 435 communicating in parallel with the manifold compartment 425, to each of which could be associated a respective hollow insert 440 and a respective obturator 450 actuated by a respective electric actuator 455.

Further, although the device 300 is especially intended to be used in a methane gas plant, it could also be used in an LPG system.

It is lastly emphasized that all the devices considered in the present description might be further provided with a safety solenoid that can selectively enable and prevent the passage of fuel gas between the filter and the injectors. Obviously a technician in the sector might make numerous modifications of a technical/applicational nature to the above-described devices, without departing from the scope of the invention as claimed below.

## Claims

1. An integrated device (300) for fuel supply in an internal combustion engine, which comprises at least:
a pressure reducer (485) comprising a reducer body containing valve means (360) for reducing and regulating a pressure of the fuel, a filter (490) comprising a filter body containing a filter element (430) for filtering the fuel, and
one or more injectors (495), each of which comprises an injector body in which valve means (450) are contained for regulating the fluid flow towards a nozzle (460),
**characterised in that** at least a portion of the reducer body and at least a portion of the filter body and at least a portion of the injector body are made by an internally hollow single body (310).

2. The device (300) of claim 1, **characterised in that** the single body (310) comprises an internal channelling (420) which sets a containing chamber (315) of the valve means (360) of the pressure reducer (485) in communication with a containing chamber (400) of the filter element (430).

3. The device (300) of any one of the preceding claims, **characterised in that** the single body (310) comprises an internal channelling (425) able to place the containing chamber (400) of the filter element (430) in communication with the internal volume of the injector body of each injector (495).

4. The device (300) of claim 3, **characterised in that** the internal channelling comprises a manifold compartment (425) communicating with the containing chamber (400) of the filter element (430) and with the internal volume of the injector body of each injector (495).

5. The device (300) of any one of the preceding claims, **characterised in that** the single body comprises an internal channelling for circulation of a second fluid, which is distinct and separate from the chambers and from the channellings for passage of the fuel.

6. A fuel supply plant for an internal combustion engine, **characterised in that** it comprises a tank for containing the fuel to which an integrated device (300) according to any one of the preceding claims is connected.

7. An internal combustion engine, **characterised in that** it is equipped with a supply plant according to claim 6.

## Patentansprüche

1. Integrierte Vorrichtung (300) zur Kraftstoffversorgung in einem Verbrennungsmotor, die mindestens folgendes umfasst:
einen Druckreduzierer (485), umfassend einen Reduziererkörper enthaltend Ventilmittel (360) zum Reduzieren und Regulieren eines Drucks des Kraftstoffs, einen Filter (490), umfassend einen Filterkörper, der ein Filterelement (430) zum Filtern des Kraftstoffs enthält, und
ein oder mehrere Einspritzventile (495), wovon jedes einen Einspritzventilkörper umfasst, in dem Ventilmittel (450) zum Regulieren des Fluidstroms zu einer Düse (460) enthalten sind,
**dadurch gekennzeichnet, dass** mindestens ein Abschnitt des Ventilkörper und mindestens ein Abschnitt des Filterkörpers und mindestens ein Abschnitt des Einspritzventilkörpers in einem einzelnen intern hohlen Körper (310) gemacht sind.

2. Vorrichtung (300) nach Anspruch 1, **dadurch gekennzeichnet, dass** der einzelne Körper (310) eine interne Kanalbildung (420) umfasst, die eine beinhaltende Kammer (315) des Ventilmittels (360) des Druckreduzierers (485) in Kommunikation mit einer beinhaltenden Kammer (400) des Filterelements (430) bringt.

3. Vorrichtung (300) nach einem der vorherigen Ansprüche, **dadurch gekennzeichnet, dass** der einzelne Körper (310) eine interne Kanalbildung (425) umfasst, die in der Lage ist, die beinhaltende Kammer (400) des Filterelements (430) in Kommunikation mit dem internen Volumen des Einspritzventilkörpers von jedem Einspritzventil (495) zu bringen.

4. Vorrichtung (300) nach Anspruch 3, **dadurch gekennzeichnet, dass** die Interne Kanalbildung einen Verteilerraum (425) umfasst, der mit der beinhaltenden Kammer (400) des Filterelements (430) und mit dem internen Volumen des Einspritzventilkörpers von jedem Einspritzventil (495) kommuniziert.

5. Vorrichtung (300) nach einem der vorherigen Ansprüche, **dadurch gekennzeichnet, dass** der einzelne Körper eine interne Kanalbildung zum Zirkulieren eines zweiten Fluids umfasst, die sich von den Kammern und Kanalbildungen für den Durchlauf des Kraftstoffs unterscheidet und davon getrennt ist.

6. Kraftstoffversorgungsanlage für einen Verbrennungsmotor, **dadurch gekennzeichnet, dass** sie einen Tank zum Enthalten des Kraftstoffs umfasst, mit dem eine integrierte Vorrichtung (300) nach einem der vorherigen Ansprüche verbunden ist.

7. Verbrennungsmotor, **dadurch gekennzeichnet, dass** er mit einer Versorgungsanlage nach Anspruch 6 ausgerüstet ist.

## Revendications

1. Un dispositif intégré (300) pour l'approvisionnement en carburant au sein d'un moteur à combustion interne, comprenant au moins :
un réducteur de pression (485) comprenant un corps réducteur contenant des moyens de soupape (360) afin de réduire et réguler une pression du carburant, un filtre (490) comprenant un corps de filtre incluant un élément filtrant (430) afin de filtrer le carburant, et un ou plusieurs injecteurs (495), comprenant chacun un corps d'injecteur au sein duquel sont logés des moyens de soupape (450) afin de réguler l'écoulement de fluide vers un embout (460), **caractérisé en ce qu'**au moins une portion du corps réducteur et au moins une portion du corps de filtre et au moins une portion du corps d'injecteur sont réalisées dans un corps creux interne unique (310).

2. Le dispositif (300) de la revendication 1, **caractérisé en ce que** le corps unique (310) comprend une canalisation interne (420) mettant en relation une chambre de confinement (315) des moyens de soupape (360) du réducteur de pression (485) avec une chambre de confinement (400) de l'élément filtrant (430).

3. Le dispositif (300) de l'une quelconque des revendications précédentes, **caractérisé en ce que** le corps unique (310) comprend une canalisation interne (425) permettant de mettre en relation la chambre de confinement (400) de l'élément filtrant (430) avec le volume interne du corps d'injecteur de chaque injecteur (495).

4. Le dispositif (300) de la revendication 3, **caractérisé en ce que** la canalisation interne comprend un compartiment collecteur (425) communicant avec la chambre de confinement (400) de l'élément filtrant (430) et avec le volume interne du corps d'injecteur de chaque injecteur (495).

5. Le dispositif (300) de l'une quelconque des revendications précédentes, caractérisé en ce le corps unique comprend une canalisation interne destinée à la circulation d'un second fluide, distincte et indépendante des chambres et des canalisations pour le passage du carburant.

6. Système pour l'approvisionnement en carburant destiné à un moteur à combustion interne, **caractérisé en ce qu'**il comprend un réservoir destiné à accueillir le carburant, auquel est relié un dispositif intégré (300) selon l'une quelconque des revendications précédentes.

7. Un moteur à combustion interne, **caractérisé en ce qu'**il est équipé d'un système d'approvisionnement selon la revendication 6.
